# EUROPEAN PATENT APPLICATION

(11) **EP 3 893 191 A1**
(43) Date of publication of application: **13.10.2021**
(21) Application number: 21176363.6
(22) Date of filing: 25.01.2016
(51) Int. Cl.: G06T 1/00, H04N 19/00, G06T 9/00, H04N 19/103, H04N 19/182, H04N 19/196, H04N 19/186

(54) **METHOD AND DEVICE FOR IMAGE PROCESSING**

(30) Priority: 27.01.2015 CN 201510040409; 22.01.2016 CN 201610045646
(62) Divisional of application: 16742729.3
(71) Applicant: Tongji University, Shanghai 200092 (CN); ZTE Corporation, Shenzhen, Guangdong 518057 (CN)
(72) Inventor: LIN, Tao, Shanghai, 200092 (CN); LI, Ming, Shenzhen, Guangdong, 518057 (CN); SHANG, Guoqiang, Shenzhen, Guangdong, 518057 (CN); WU, Zhao, Shenzhen, Guangdong, 518057 (CN)
(74) Representative: Brunazzi, Stefano

(57) **Abstract**

A method and device for image processing is provided, and the method includes that: corresponding pixels in palette pixels corresponding to input pixels are determined, and the input pixels comprises one or more pixels which are not included in the palette pixels; and the input pixels are converted into the corresponding pixels in the palette pixels. By the present invention, a problem of incapability in converting any pixel outside a current block into a palette pixel of the current block in the related art is solved, and effects of achieving a purpose of converting any pixel outside the current block into the palette pixel of the current block and improving compression efficiency are further achieved.

## Description

### Technical Field

The present invention relates to the field of digital video coding and decoding, and in particular to a method and device for image processing.

### Background

In related art, along with development of a television and a display into resolutions of super-high definition (4K) and extra super-high definition (8K) and development and popularization of a new-generation cloud computing and information processing mode and platform adopting a remote desktop as a typical representation form, a video image data compression requirement is also made for a higher-resolution composite image including an image shot by a camera and a computer screen image. An ultrahigh-compression rate and extremely high-quality data compression technology for video images becomes indispensable.

Performing ultrahigh-efficiency compression on the video images by fully utilizing characteristics of 4K/8K images and computer screen images is also a main objective of a latest international video compression standard High Efficiency Video Coding (HEVC) under formulation and a plurality of other international standards, national standards and industrial standards.

A natural form of a digital video signal of each image is a sequence of the image. An image is usually a rectangular region formed by a plurality of pixels. And a digital video signal is a sequence of video images, which is also called as a video sequence or a sequence sometimes for short, formed by dozens of and even hundreds of thousands of frames of images. Coding the digital video signal is to code each frame of image. At any time, a frame of image which is being coded is called as a current coding image (or current coding picture). Similarly, decoding a video bitstream (called as a stream for short, also called as a bit stream) obtained by compressing the digital video signal is to decode a bitstream of each frame of image. At any time, a frame of image which is being decoded is called as a current decoding image (or current decoding picture). The current coding image and the current decoding image are collectively called as a current image (or current picture).

In almost all international standards for video coding such as MPEG-1, MPEG-2 Part 2, MPEG-4 Part 2, H.264/Advanced Video Coding (AVC) and HEVC, when a frame of image is coded (and correspondingly decoded), the frame of image is partitioned into a plurality of sub-images with MxM pixels, called as coding blocks (which are decoding blocks from the point of decoding, collectively called as coding and decoding blocks) or "Coding Units (CUs)". And the blocks of the image are coded one by one by taking a CU as a basic coding unit. M is usually 4, 8, 16, 32 and 64. Therefore, coding a video sequence is to sequentially code each CU of each frame of image. At any time, a CU which is being coded is called as a current coding CU. Similarly, decoding a bitstream of a video sequence is to sequentially decode each CU of each frame of image to finally reconstruct the whole video image sequence. At any time, a CU which is being decoded is called as a current decoding CU. The current coding CU and the current decoding CU are collectively called as a current CU.

In order to achieve adaptability to differences of image contents and properties of each part in a frame of image and pertinently and most effectively perform coding, sizes of each CU in the image are different, some being 8x8, some being 64x64 and the like. In order to seamlessly splice CUs with different sizes, a frame of image is usually divided into "Largest Coding Units (LCUs)" with the same size of NxN pixels at first. And then each LCU is further partitioned into multiple tree-structured CUs of which sizes may not be the same. Therefore, the LCUs are also called as "Coding Tree Units (CTUs)". For example, a frame of image is divided into LCUs with the same size of 64x64 pixels (N=64) at first, and a certain LCU is formed by three CUs with 32x32 pixels and four CUs with 16x16 pixels. And in such a manner, the seven tree-structured CUs form a CTU. The other LCU is formed by two CUs with 32x32 pixels, three CUs with 16x16 pixels and twenty CUs with 8x8 pixels. In such a manner, the 25 tree-structured CUs form the other CTU. Coding a frame of image is to sequentially code each CU in each CTU. In an international standard HEVC, LCU and CTU are synonyms.

A CU is further partitioned into a plurality of sub-regions. The sub-regions include, but not limited to, a Prediction Unit (PU), a Transform Unit (TU) and an Asymmetric Motion Partitioning (AMP) region.

A colour pixel usually consists of three components. Two most common pixel colour formats include a Green, Blue and Red (GBR) colour format consisting of a green component, a blue component and a red component and a YUV colour format, consisting of a luma component and two chroma components, and colour formats collectively called as YUV actually include multiple colour formats, such as a YCbCr colour format. Therefore, when a CU is coded, the CU is divided into three component planes (a G plane, a B plane and an R plane or a Y plane, a U plane and a V plane). And the three component planes are coded respectively. And three components of each pixel are also bundled and combined into a triple, and the whole CU formed by these triples is coded. The former pixel and component arrangement manner is called as a planar format of an image (and its CUs), and the latter pixel and component arrangement manner is called as a packed format of the image (and its CUs). A GBR colour format and YUV colour format of a pixel are both three-component representation formats of the pixel.

Besides a three-component representation format of a pixel, another common representation format of the pixel in a conventional art is a palette index representation format. In the palette index representation format, a numerical value of a pixel is represented by an index of a palette. There are stored numerical values or approximate numerical values of three components of the pixel to be represented in a palette space, and an address of the palette is called as an index of the pixel stored in the address. An index represents a component of a pixel, and an index also represents three components of a pixel. There are one or more palettes. Under the condition that there are multiple palettes, a complete index is actually formed by two parts, i.e. a palette number and an index of the palette with the palette number. An index representation format of a pixel is to represent the pixel with an index. The index representation format of the pixel is also called as an indexed color or pseudo color representation format of the pixel in the conventional art, or is usually directly called as an indexed pixel or a pseudo pixel or a pixel index or an index. An index is also called as an exponent sometimes. Representing a pixel in an index representation format is also called as indexing or exponentiating.

Other common pixel representation formats in the conventional art include a CMYK representation format and a grayscale representation format.

A YUV colour format is also subdivided into a plurality of sub-formats according to whether to perform down-sampling on a chroma component or not: a YUV4:4:4 pixel colour format under which a pixel is formed by a Y component, a U component and a V component; a YUV4:2:2 pixel colour format under which two left and right adjacent pixels are formed by two Y components, a U component and a V component; and a YUV4:2:0 pixel colour format under which four left, right, upper and lower adjacent pixels arranged according to 2x2 spatial positions are formed by four Y components, a U component and a V component. A component is usually represented by a number with 8∼16 bits. The YUV4:2:2 pixel colour format and the YUV4:2:0 pixel colour format are both obtained by executing chroma component down-sampling on the YUV4:4:4 pixel colour format. A pixel component is also called as a pixel sample, or is simply called as a sample.

A most basic element during coding or decoding is a pixel, is also a pixel component, and is further a pixel index (i.e. indexed pixel). A pixel or pixel component or indexed pixel adopted as the most basic element for coding or decoding is collectively called as a pixel sample, and is also collectively called as a pixel value sometimes or simply called as a sample.

In an application document of the present disclosure, "pixel sample", "pixel value", "sample", "indexed pixel" and "pixel index" are synonyms, and according to the context, it is clear that whether a "pixel" is represented or "a pixel component" is represented or an "indexed pixel" is represented or any one of the three is simultaneously represented. If it cannot get clear from the context, any one of the three is simultaneously represented.

In the application document of the present disclosure, a coding block or a decoding block (collectively called as a coding and decoding block) is a region formed by a plurality of pixels. A shape of the coding and decoding block is a rectangle, a square, a parallelogram, a trapezoid, a polygon, a round, an ellipse, a string and any other shape. The rectangle also includes a rectangle of which a width or height is a pixel value and which is degenerated into a line (i.e. a line segment or a line shape). In a frame of image, each coding and decoding block has a different shape and size. In the frame of image, some or all of coding and decoding blocks have mutually overlapped parts, and all of the coding and decoding blocks are also not overlapped. A coding and decoding block is formed by one of "pixels", "components of the pixels" and "indexed pixels", or is also formed by mixing the three or mixing any two of the three. From a point of video image coding or decoding, a coding and decoding block refers to a region which is coded or decoded in a frame of image, including, but not limited to, at least one of: an LCU, a CTU, a CU, a sub-region of the CU, a PU and a TU.

A video image compression technology in the related art includes: a prediction manner (including, but not limited to, intraframe prediction and interframe prediction) and a copying manner (including, but not limited to, block copying, index copying, micro-block copying, strip copying, string copying, rectangular copying and point copying). Here, "copying" refers to copying an optimal matched pixel found by a coder. Therefore, from a point of a coder, the copying manner is also called as a matching manner (including, but not limited to, block matching, index matching, micro-block matching, strip matching, string matching, rectangular matching and point matching).

An important characteristic of an existing copying manner using a palette and pixel indices is that the palette is generated and constructed by pixels in a current coding and decoding block (called as a current block for short), part or all of the pixels of the current block are converted into palette pixels, namely converted into indices of the palette pixels, and then pixels (or equivalently, pixel indices) are searched and copied in the converted pixels (or equivalently in the pixel indices).

In an existing copying manner using a palette and pixel indices, searching and copying are performed in a current block, so that compression efficiency is lower. For extending a search and copying range of the copying manner using the palette and the pixel indices to be outside the current block to improve the compression efficiency, a problem of how to convert any pixel outside the current block into a palette pixel of the current block is required to be solved at first.

Therefore, it is necessary to seek for a low-complexity and high-efficiency conversion manner to convert any pixel into a palette pixel to improve a compression effect.

### Summary

At least some embodiments of the present invention provide a method and device for image processing, so as at least to partially solve a problem of incapability in converting any pixel outside a current block into a palette pixel of the current block in related art.

In an embodiment of the present invention, a method for image processing is provided, which includes that:
converting any pixel into a palette pixel, and a conversion manner at least includes the following steps: dividing palette pixels or pixel indices into K groups according to a predetermined rule; for any pixel, determining which group of the K groups the any pixel belongs to, and determining the group as an optimal group; and converting the any pixel into one of palette pixels in the optimal group, and determining this one palette pixel as an optimal palette pixel.

In one embodiment, the palette pixels or the pixel indices are divided into the K groups according to predetermined characteristics of pixel numerical values, and for any pixel sample, the conversion manner at least includes the following steps: classifying the any pixel sample into one group of the K groups according to the predetermined characteristics of the pixel numerical values and a numerical value of the any pixel sample, and determining this one group as an optimal group; and calculating distances between the any pixel sample and part or all of palette pixel samples in the optimal group, determining a palette pixel sample with an optimal distance, and determining the determined palette pixel sample as a palette pixel sample corresponding to the any pixel sample.

In one embodiment, the distances are errors between pixels.

In one embodiment, the predetermined characteristics of the pixel numerical values are characteristics of numerical values of three components of the pixels.

In one embodiment, the palette pixels or the pixel indices are grouped according to the characteristics of numerical values of the three components in the following manners: dividing the palette, which is called as a zeroth-layer group, pixels into I groups, which are called as first-layer groups, according to numerical values from large to small of first components of the pixels, and numbers of the pixels or numbers of the pixel indices in the I groups are approximate as much as possible; for each group in I first-layer groups, dividing the pixels of the first-layer group (recorded as an ith group, i=1,2,3,......,1) into J(i) groups, which are called as second-layer groups, according to numerical values from large to small of second components of the pixels, and numbers of the pixels or numbers of the pixel indices in the J(i) groups are approximate as much as possible and the palette pixels or the pixel indices are divided into J=J(1)+J(2)+J(3)+......+J(I) second-layer groups; and for each group in J second-layer groups, dividing pixels of this group, which is recorded as a jth group and j=1,2,3......,J, into K(j) groups, which are called as third-layer groups, according to numerical values from large to small of third components of the pixels, and numbers of the pixels or numbers of the pixel indices) in the K(j) groups are approximate as much as possible and the palette pixels or the pixel indices are divided into K=K(1)+K(2)+K(3)+......+K(J) third-layer groups; the first components, the second components and the third components respectively correspond to the first-layer groups, the second-layer groups and the third-layer groups, and the first-layer groups, the second-layer groups and the third-layer groups are respectively generated according to the first components, the second components and the third components.

In one embodiment, I, J(i) and K(j) follow one of the following rules: a first rule: all J(i) is equal to J0, so that J=I × J0; a second rule: all K(j) is equal to K0, so that K=J× K0; a third rule: all J(i) is equal to J0 and all K(j) is equal to K0, so that J=I×J0 and K=J×J0×K0; a fourth rule: I=2, all (Ji) is equal to 2 and all K(j) is equal to 2, so that J=4 and K=8; and a fifth rule: I=4, all J(i) is equal to 4 and all K(j) is equal to 2, so that J=16 and K=32.

In one embodiment, the first component, the second component and the third component are respectively a Y component, a U component and a V component; or, the first component, the second component and the third component are respectively the Y component, the V component and the U component; or, the first component, the second component and the third component are respectively a G component, a B component and an R component; or, the first component, the second component and the third component are respectively a component with a largest number of different numerical values in the three components, a component with a second largest number of different numerical values in the three components and a component with a smallest number of different numerical values in the three components; or, the first component, the second component and the third component are respectively a component with the smallest number of different numerical values in the three components, a component with a second smallest number of different numerical values in the three components and a component with the largest number of different numerical values in the three components.

In one embodiment, during performing grouping of a next layer on a group, determining a number of subdivided groups according to a number of different numerical values in a component corresponding to a layer in the group.

In one embodiment, during performing grouping of the next layer on the group, when a number of different numerical values in the component corresponding to the layer in the group is 1, dividing the group into one group without further subdivision, and there is still one group in the next layer; when the number of the different numerical values is larger than 1, dividing the group into two groups of the next layer.

In one embodiment, the method includes: during performing grouping of the next layer on the group, when a number of different numerical values in the component corresponding to the layer in the group is N, dividing the group into N groups.

In one embodiment, after dividing the palette pixels or the pixel indices into the K groups according to the predetermined rule, further including: when the any pixel is not classified into any group in the K groups, classifying an input pixel into an empty group; and after the any pixel is classified into the empty group, setting the optimal palette pixel as one of the any pixel, or an empty pixel, or a default value.

In one embodiment, the any pixel includes an input pixel which is input.

In another embodiment of the present invention, another method for processing image is also provided, which includes that:
determining corresponding pixels among palette pixels corresponding to input pixels, and the input pixels include one or more pixels which are not included in the palette pixels; and converting the input pixels into the corresponding pixels in the palette pixels.

In one embodiment, determining the corresponding pixels in the palette pixels corresponding the input pixels includes: dividing the palette pixels into K groups, and K is a positive integer; determining the group among the K groups into which one of the input pixels is to be classified; and determining the corresponding pixel in the group into which the one of the input pixels is to be classified.

In one embodiment, dividing the palette pixels into the K groups includes: dividing the palette pixels into the K groups according to a characteristic of input pixel samples; determining the group among the K groups into which the one of the input pixels is to be classified includes: determining the group among the K groups into which the one of the input pixels is to be classified according to the characteristic of the input pixel samples and the input pixel samples; and determining the corresponding pixel in the group into which the one of the input pixels is to be classified includes: determining difference values of samples of the one of the input pixels and part or all of the palette pixels in the group into which the one of the input pixels is to be classified, and determining a palette pixel with a smallest difference value with the one of the input pixels as the corresponding pixel.

In one embodiment, dividing the palette pixels into the K groups according to the characteristic of the input pixel samples includes: dividing the palette pixels into the K groups according to characteristics of numerical values of components of pixels.

In one embodiment, dividing the palette pixels into the K groups according to the characteristics of the numerical values of the components of the pixels includes: dividing the palette pixels into the K groups according to numerical values of first components in the components of the pixels; or, dividing the palette pixels into L groups according to numerical values of first components in the components of the pixels, and the L groups are first-layer groups and L is a positive integer; and dividing pixels of an xth group in the first-layer groups into M(x) groups according to numerical values of second components in the components of the pixels, and the groups formed by dividing pixels of the xth group in the first-layer groups are second-layer groups, x=1,2,3,......,l, M(x) is a positive integer, and K=M(1)+M(2)+......+M(x); or, dividing the palette pixels into I groups according to numerical values of first components in the components of the pixels, and the I groups are first-layer groups and I is a positive integer; dividing pixels of an ith group in the first-layer groups into J(i) groups according to numerical values of second components in the components of the pixels, and i=1,2,3,......,l, J(i) is a positive integer, the groups formed by dividing the pixels of the ith group in the first-layer groups are second-layer groups and the palette pixels are divided into J=J(1)+J(2)+J(3)+......+J(I) second-layer groups; and dividing pixels of a jth group in the second-layer groups into K(j) groups according to numerical values of third components in the components of the pixels, and j=1,2,3,......,J, K(j) is a positive integer, the groups formed by dividing the pixels of the jth group in the second-layer groups are third-layer groups, and the palette pixels are divided into K=K(1)+K(2)+K(3)+......+K(J) third-layer groups.

In one embodiment, the method includes at least one of: differences between numbers of pixels of each group in the K groups are smaller than a fourth predetermined threshold value; differences between numbers of pixels of each group in the L groups are smaller than a fifth predetermined threshold value; differences between numbers of pixels of each group in the M(x) groups are smaller than a sixth predetermined threshold value; differences between numbers of pixels of each group in the I groups are smaller than a first predetermined threshold value; differences between numbers of pixels of each group in the J(i) groups are smaller than a second predetermined threshold value; differences between numbers of pixels of each group in the K(j) groups are smaller than a third predetermined threshold value; I=2, all J(i) is equal to 2 and all K(j) is equal to 2, so that J=4 and K=8; and I=4, all J(i) is equal to 4 and all K(j) is equal to 2, so that J=16 and K=32.

In one embodiment, the method includes at least one of: each of the first components is any component in a Y component, a U component and a V component, or any component in a G component, a B component and an R component; each of the second components is any component, except the first components, in a Y component, a U component and a V component, or any component, except the first components, in a G component, a B component and an R component; and each of the third components is any component, except the first components and the second components, in a Y component, a U component and a V component, or any component, except the first components and the second components, in a G component, a B component and an R component.

In one embodiment, the method includes one of: a first component, a second component and a third component are respectively a Y component, a U component and a V component; a first component, a second component and a third component are respectively a Y component, a V component and a U component; a first component, a second component and a third component are respectively a G component, a B component and an R component; a first component, a second component and a third component are respectively a component with a largest number of different numerical values in the three components, a component with a second largest number of different numerical values in the three components and a component with a smallest number of different numerical values in the three components; and a first component, a second component and a third component are respectively a component with the smallest number of different numerical values in the three components, a component with a second smallest number of different numerical values in the three components and a component with the largest number of different numerical values in the three components, and three components are a Y component, a U component and a V component, or three components are a G component, a B component and an R component.

In one embodiment, during performing grouping of the next layer on the group, determining a number of subdivided groups of the next layer according to a number of different numerical values in the component corresponding to the layer in the group.

In one embodiment, during performing grouping of the next layer on the group, when a number of different numerical values in the component corresponding to the layer in the group is 1, dividing the group into one group of the next layer; when the number of different numerical values is larger than 1, dividing the group more than two groups of the next layer.

In one embodiment, the method includes: during performing grouping of the next layer on the group, when a number of different numerical values in the component corresponding to the layer in the group is N, dividing the group into N groups of the next layer.

In one embodiment, after dividing the palette pixels into the K groups, further including: when the one of the input pixels is not classified into any group among the K groups, classifying each of the one of the input pixels into an empty group; and after the one of the input pixels is classified into the empty group, setting the palette pixel corresponding to the one of the input pixels as the value of the one of the input pixels, or an empty pixel, or a default value.

In another embodiment of the present invention, a device for image processing is provided, which includes: a determination component, arranged to determine corresponding pixels in palette pixels corresponding to the input pixels, and the input pixels include one or more pixels which are not included in the palette pixels; and a conversion component, arranged to convert the input pixels into the corresponding pixels in the palette pixels.

According to the at least some embodiments of the present invention, the corresponding pixels corresponding to the input pixels are determined in palette pixels, and the input pixels include one or more pixels which are not included in the palette pixels; and the input pixels are converted into the corresponding pixels in the palette pixels. By the present invention, the problem of incapability in converting any pixel outside the current block into the palette pixel of the current block in the related art is solved, and effects of achieving a purpose of converting any pixel outside the current block into the palette pixel of the current block and improving compression efficiency are further achieved.

### Brief Description of the Drawings

The drawings described here are adopted to provide a further understanding to the present invention, and form a part of the present invention. Schematic embodiments of the present invention and descriptions thereof are adopted to explain the present invention and not intended to form improper limits to the present invention. In the drawings:
Fig. 1 is a schematic diagram of a conversion manner according to an embodiment of the present invention.
Fig. 2 is a flowchart of a conversion manner according to an embodiment of the present invention.
Fig. 3 is a flowchart of a method for image processing according to an embodiment of the present invention.
Fig. 4 is a structural block diagram of a device for image processing according to an embodiment of the present invention.

### Detailed Description

The present invention will be described below in detail with reference to the drawings and embodiments. It is important to note that the embodiments in the present invention and characteristics in the embodiments are combined under the condition of no conflicts.

It is important to note that terms "first", "second" and the like in the specification, claims and drawings of the present invention are adopted not to describe a specific sequence or order but to distinguish similar objects.

A main technical characteristic in the embodiments of the present invention is that: when any pixel (the any pixel includes an input pixel which is input) is converted into a palette pixel, palette pixels are divided into a plurality of groups at first, and then, for any pixel, the group into which the any pixel is to be classified is determined at first, and the palette pixel, into which the any pixel is to be converted, in the group is determined in the determined group.

Optionally, the palette pixels are divided into a plurality of first-layer groups at first, then part or all of the first-layer groups are further subdivided into a plurality of second-layer groups, and by parity of reasoning, a plurality of Lth-layer groups are formed by subdivision. For any pixel, the first-layer group into which the any pixel is to be classified is determined at first, then the second-layer group into which the any pixel is to be divided is determined, and by parity of reasoning, the Lth-layer group into which the any pixel is to be divided is finally determined. At last, the palette pixel, into which the any pixel is to be converted, in the group is determined in the determined Lth-layer group.

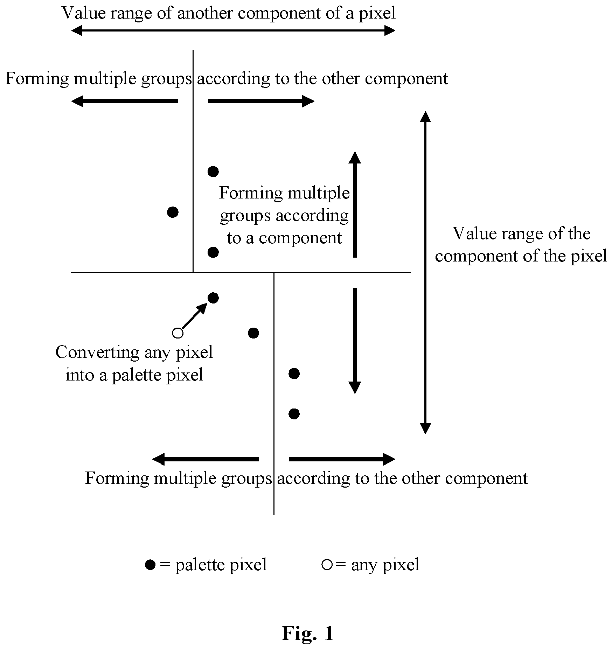

Fig. 1 is a schematic diagram of a conversion manner according to an embodiment of the present invention. Before any pixel is converted, the pixels (represented by black solid points in Fig. 1) are divided into multiple groups (two groups as shown in Fig. 1) according to a component of each pixel, and then each group (totally two groups are shown in Fig. 1) is subdivided into multiple groups (two groups are shown in Fig. 1) according to another component of each pixel. For any pixel (represented by a hollow point in Fig. 1), the group into which the pixel is to be classified is determined, and then the palette pixel, into which the pixel is to be converted, in the group is determined in the determined group.

The technical characteristic of the present invention is described above through a plurality of specific examples. Those skilled in the art can easily know about other advantages and effects of the present invention from contents disclosed by the specification. The present invention is also implemented or applied through other different specific implementation modes, and various modifications or variations are also made to each detail in the specification on the basis of different viewpoints and applications without departing from the scope protection as claimed in claims of the present invention.

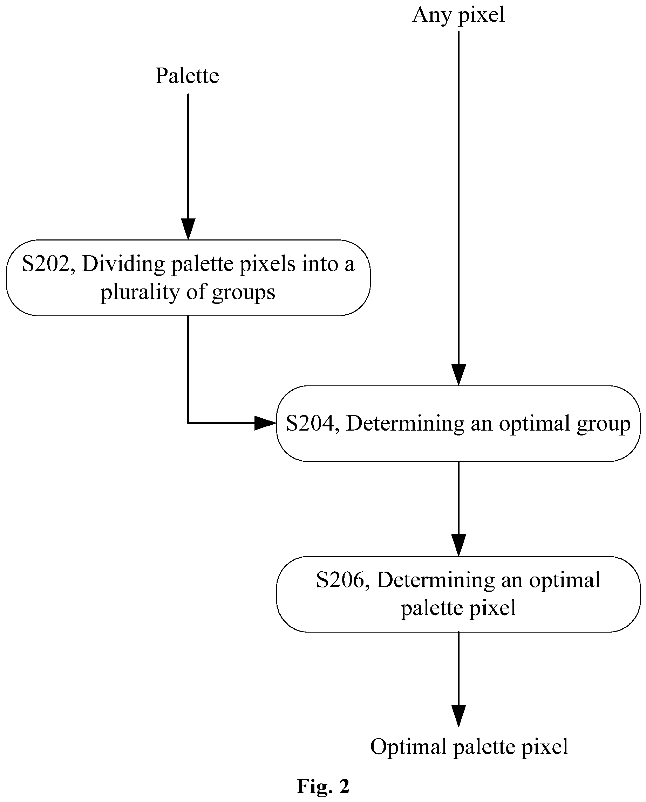

Fig. 2 is a flowchart of a conversion manner according to an embodiment of the present invention. As shown in Fig. 2, the conversion manner in the embodiment at least includes the following steps.

At step S202, palette pixels (or equivalently, pixel indices) are divided into K groups (K is usually valued to be 1 ≤ K ≤ 16 and K=1 is equivalent to no grouping) according to a predetermined rule, and the K groups are not exclusive, that is, the same palette pixel are divided into different groups; and the K groups are also not complete, that is, there are a palette pixel divided into no group.

At step S204, for any pixel, the any pixel is determined to be classified into one of the K groups, called as an optimal group, namely determining the group as the optimal group.

At step S206, the any pixel is determined to be converted into one of the palette pixels in the optimal group in the optimal group, and the palette pixel is called as an optimal palette pixel, that is, the palette pixel is determined as a palette pixel corresponding to the any pixel (for example, an input pixel).

The explanatory charts provided above are intended to schematically describe the basic concept of the present invention, the explanatory charts display components directly related to the present invention, and are not drawn according to a number, shapes and sizes of components during practical implementation, a form, number and proportion of each component is freely changed during practical implementation, and a component layout form is also more complex.

The below is more implementation details and variations of the present invention.

### Embodiment 1 about the conversion manner

The palette pixels (or equivalently, the pixel indices) are divided into the K groups according to predetermined characteristics of pixel numerical values, and for any pixel sample, the conversion manner at least includes the following steps.

At step 1, the group, into which the any pixel sample is to be classified, in the K groups is determined according to the predetermined characteristics of the pixel numerical values and a numerical value of the any pixel sample, namely determining the optimal group.

At step 2, distances are calculated between the any pixel sample and part or all of palette pixel samples in the optimal group, and the palette pixel sample with an optimal distance is determined, namely determining an optimal palette pixel sample.

### Embodiment about the conversion manner

The distances in embodiment 1 are errors between the pixels.

### Embodiment 3 about the conversion manner

The predetermined characteristics of the pixel numerical values in embodiment 1 are characteristics of numerical values of three components of the pixels.

### Embodiment 4 about the conversion manner

The palette pixels (or equivalently, the pixel indices) are grouped according to the characteristics of the numerical values of the three components in embodiment 3 in the following manners.

In manner one, the palette (called as a zeroth-layer group) pixels are divided into I groups (called as first-layer groups) according to numerical values (from large to small) of first components of the pixels, and numbers of the pixels (or equivalently, numbers of the pixel indices) in the I groups are approximate as much as possible.

In manner two, for each group in the I first-layer groups, the pixels of the first-layer group (recorded as an ith group, i=1,2,3,......,l) are divided into J(i) groups (called as second-layer groups) according to numerical values (from large to small) of second components of the pixels, and numbers of the pixels (or equivalently, numbers of the pixel indices) in the J(i) groups are approximate as much as possible and thus the palette pixels (or equivalently, the pixel indices) are divided into J=J(1)+J(2)+J(3)+......+J(I) second-layer groups.

In manner three, for each group in the J second-layer groups, the pixels of the group (recorded as a jth group, j=1,2,3......,J) are divided into K(j) groups (called as third-layer groups) according to numerical values (from large to small) of third components of the pixels, and numbers of the pixels (or equivalently, numbers of the pixel indices) in the K(j) groups are approximate as much as possible and thus the palette pixels (or equivalently, the pixel indices) are finally divided into K=K(1)+K(2)+K(3)+......+K(J) third-layer groups.

Moreover, the first components, the second components and the third components respectively correspond to the first-layer groups, the second-layer groups and the third-layer groups. That is, the first-layer groups, the second-layer groups and the third-layer groups are respectively generated according to the first components, the second components and the third components.

### Embodiment 5 about the conversion manner

I, J(i) and K(j) in embodiment 4 follow one of the following rules:
1) all J(i) is equal to J0, so that J=l × J0;
2) all K(j) is equal to K0, so that K=J × K0;
3) all J(i) is equal to J0 and all K(j) is equal to K0, so that J=l × J0 and K=J × J0 × K0;
4) I=2, all (Ji) is equal to 2 and all K(j) is equal to 2, so that J=4 and K=8; and
5) l=4, all J(i) is equal to 4 and all K(j) is equal to 2, so that J=16 and K=32.

### Embodiment 6 about the conversion manner

The first component, second component and third component in embodiment 4 are respectively a Y component, a U component and a V component.

Or, the first component, the second component and the third component are respectively the Y component, the V component and the U component.

Or, the first component, the second component and the third component are respectively a G component, a B component and an R component.

Or, the first component, the second component and the third component are respectively the component with a largest number (recorded as N1) of different numerical values in the three components, the component with a second largest number (recorded as N2) of different numerical values in the three components and the component with a smallest number (recorded as N3) of different numerical values in the three components. That is, N1 ≥ N2 ≥ N3, for example, a palette includes the following 8 pixels, and three components from left to right are respectively the Y component, the U component and the V component:
P0=(32, 74, 125),
P1=(33, 75, 128),
P2=(32, 76, 128),
P3=(33, 77, 128),
P4=(33, 78, 128),
P5=(34, 79, 128),
P6=(35, 80, 128),
P7=(35, 81, 128),
a number of different numerical values in the Y component is 4, a number of different numerical values in the U component is 8 and a number of different numerical values in the V component is 2, so that the first component, the second component and the third component are respectively the U component, the Y component and the V component, N1=8, N2=4 and N3=2.

Or, the first component, the second component and the third component are respectively the component with the smallest number (recorded as N1) of different numerical values in the three components, the component with a second smallest number (recorded as N2) of different numerical values in the three components and the component with the largest number (recorded as N3) of different numerical values in the three components. And following the above example, the first component, the second component and the third component are respectively the V component, the Y component and the U component, N1=2, N2=4 and N3=8.

### Embodiment 7 about the conversion manner

During performing grouping of a next layer on a group in embodiments 4 and 6, a number of subdivided groups is determined according to a number of different numerical values in the component corresponding to the layer in the group.

### Embodiment 8 about the conversion manner

In embodiment 7, during performing grouping of a next layer on a group, when a number of different numerical values in the component corresponding to the layer in the group is 1, the group is divided into one group without further subdivision, and there is still one group in the next layer. Otherwise (that is, the number of the different numerical values is larger than 1), the group is divided into two groups of the next layer. Following the example in embodiment 6, during first-layer grouping in the zeroth-layer group (i.e. a palette), a number of different numerical values in the U component is 8, so that the zeroth-layer group is respectively divided into 8 first-layer groups, with pixels {P0, P1, P2, P3} and {P4, P5, P6, P7}. Then, in the two first-layer groups, numbers of different numerical values in the Y components are 2 and 3, so that each of the two first-layer groups is divided into two second-layer groups, with pixels {P0, P2}, {P1, P3}, {P4, P5} and {P6, P7}. Finally, in the four second-layer groups, numbers of different numerical values in the V components of a certain group are all 2, so that the second-layer group is divided into two third-layer groups, and numbers of different numerical values in the V components of the other three groups are all 1, so that the three second-layer groups will not be further subdivided, and respectively have one third-layer group. There are totally 5 third-layer groups, with pixels {P0}, {P2}, {P1, P3}, {P4, P5} and {P6, P7}.

### Embodiment 9 about the conversion manner

In embodiment 7, during performing grouping of a next layer on a group, when a number of different numerical values in the component corresponding to the layer in the group is N, the group is divided into N groups. Following the last example (the first component, the second component and the third component are respectively the V component, the Y component and the U component, N1=2, N2=4 and N3=8) in embodiment 6, during first-layer grouping in the zeroth-layer group (i.e. the palette), a number of different numerical values in the V component is 2, so that the zeroth-layer group is divided into two first-layer groups, with pixels {P0} and {P1, P2, P3, P4, P5, P6, P7}. Then, in the two first-layer groups, numbers of different numerical values in the Y components are 1 and 4, so that the two first-layer groups are divided into one second-layer group and four second-layer groups, totally 5 second-layer groups, with pixels {P0}, {P2}, {P1, P3, P4}, {P5} and {P6, P7}. Finally, in the 5 second-layer groups, numbers of different numerical values in the U components are 1, 1, 3, 1 and 2 respectively, so that the 5 second-layer groups are respectively divided into 1, 1, 3, 1 and 2 third-layer groups, totally 8 third-layer groups, with pixels {P0}, {P2}, {P1}, {P3}, {P4}, {P5}, {P6} and{P7}.

### Embodiment 10 about the conversion manner

Optionally, when the any pixel is not classified into any group in the K groups, the optimal group corresponding to the pixel is set to be an empty group. That is, the any pixel is not classified into any group, and thus is also not converted into a palette pixel.

Optionally, for a pixel of which an optimal group is an empty group, the optimal palette pixel is set as one of the pixel, or an empty pixel, or a default value is set, and the empty pixel represents that a pixel in the empty group is not converted into any palette pixel.

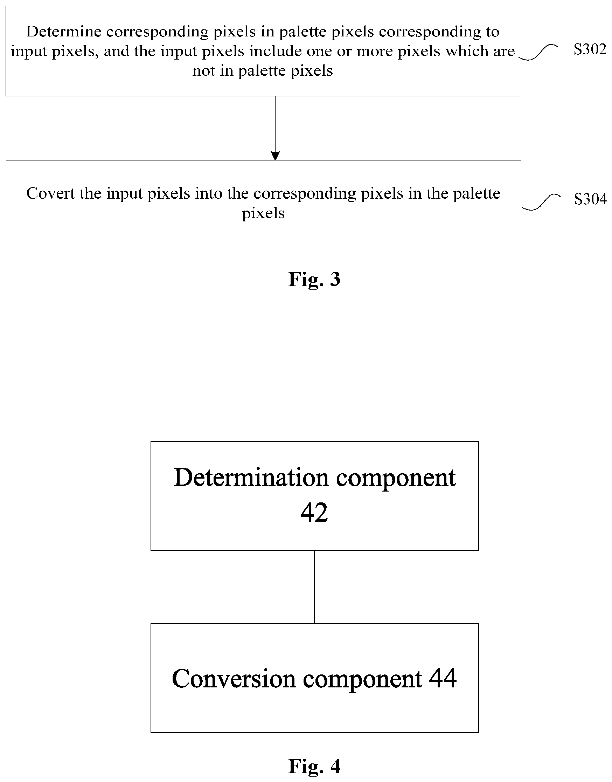

An embodiment also provides an image processing method. Fig. 3 is a flowchart of a method for image processing according to an embodiment of the present invention. As shown in Fig. 3, the flow includes the following steps.

At step S302, corresponding pixels in palette pixels corresponding to input pixels are determined, and the input pixels include one or more pixel which are not included in the palette pixels.

At step S304, the input pixels are converted into the corresponding pixels in the palette pixels.

By the steps, before an image is compressed, the input pixel except the palette pixels is also converted into a pixel in the palette pixels, so that a compression rate of the image is effectively improved. The problem of incapability in converting any pixel outside a current block into a palette pixel of the current block in the related art is solved, and effects of achieving a purpose of converting any pixel outside the current block into a palette pixel of the current block and improving compression efficiency are further achieved.

In an optional embodiment, when the corresponding pixels corresponding to the input pixels are determined, the palette pixels are grouped, including: dividing the palette pixels into K groups, and K is a positive integer; determining the group among the K groups into which the one of the input pixels is to be classified; and determining the corresponding pixel in the group into which the one of the input pixels is to be classified.

In an optional embodiment, dividing the palette pixels into the K groups includes: dividing the palette pixels into the K groups according to a characteristic of input pixel samples; determining the group among the K groups into which the one of the input pixels is to be classified includes: determining the group among the K groups into which the one of the input pixels is to be classified according to the characteristic of the input pixel samples and the input pixel samples (for example, determining that the input pixel will be classified into a group containing a pixel resulting in a difference between the characteristic of the input pixel which is smaller than a preset threshold); and determining the corresponding pixel in the group into which the one of the input pixels is to be classified includes: determining difference values of sample of the one of the input pixels and part or all of the palette pixels in the group into which the input pixel is to be classified, and determining the palette pixel with a smallest difference value with the one of the input pixels as the corresponding pixel.

Moreover, there are multiple grouping manners for grouping the palette pixels, and how to perform grouping will be described below with examples. Dividing the palette pixels into the K groups according to the characteristic of the input pixel samples includes: dividing the palette pixels into the K groups according to characteristics of numerical values of components of the pixels. For example, grouping may be performed according to a sequence from large to small numerical values of the components of the pixels, or grouping is performed according to a sequence from small to large numerical values of the components of the pixels, and a number of the pixels in each group may be set to be similar, that is, a number difference between every two groups is smaller than a predetermined threshold value.

In an optional embodiment, when the palette pixels are grouped, grouping may be performed once or for multiple times according to the components of the pixels. In the embodiment, dividing the palette pixels into the K groups according to the characteristics of the numerical values of the components of the pixels includes: dividing the palette pixels into the K groups according to the numerical values of first components in the components of the pixels (that is, the palette pixels are grouped once);
or, dividing the palette pixels into L groups according to the numerical values of the first components in the components of the pixels, the L groups being first-layer groups and L being a positive integer, and dividing the pixels of an xth group in the first-layer groups into M(x) groups according to the numerical values of second components in the components of the pixels, and the groups formed by dividing the pixels of the xth group in the first-layer groups are second-layer groups, x=1,2,3,......,l, M(x) is a positive integer, and K=M(1)+M(2)+......+M(x) (that is, the palette pixels are grouped once at first according to the first components, and then the groups formed by grouping are further divided according to the second components, that is, the palette pixels are grouped twice);
or, dividing the palette pixels into I groups according to the numerical values of the first components in the components of the pixels, the I groups being first-layer groups and I being a positive integer, dividing the pixels of an ith group in the first-layer groups into J(i) groups according to the numerical values of the second components in the components of the pixels, i=1,2,3,......,l, J(i) being a positive integer, the groups formed by dividing the pixels of the ith group in the first-layer groups being second-layer groups and the palette pixels being divided into J=J(1)+J(2)+J(3)+......+J(I) second-layer groups, and dividing the pixels of a jth group in the second-layer groups into K(j) groups according to the numerical values of third components in the components of the pixels, and j=1,2,3,......,J, K(j) is a positive integer, the groups formed by dividing the pixels of the jth group in the second-layer groups are third-layer groups, and the palette pixels are divided into K=K(1)+K(2)+K(3)+......+K(J) third-layer groups (that is, the palette pixels are grouped for three times, and grouping is performed according to different components each time: grouping is performed for the first time according to the first components, grouping is performed for the second time according to the second components and grouping is performed for the third time according to the third components).

Similarly, in future development, when there are more than four components in the pixels, layered grouping is also performed on the palette pixels for more than four times according to different components respectively.

In an optional embodiment, the method further includes at least one of that: differences between numbers of the pixels of each group in the K groups are smaller than a fourth predetermined threshold value; differences between numbers of the pixels of each group in the L groups are smaller than a fifth predetermined threshold value; differences between numbers of the pixels of each group in the M(x) groups are smaller than a sixth predetermined threshold value; differences between numbers of the pixels of each group in the I groups are smaller than a first predetermined threshold value; differences between numbers of the pixels of each group in the J(i) groups are smaller than a second predetermined threshold value; differences between numbers of the pixels of each group in the K(j) groups are smaller than a third predetermined threshold value; I=2, all J(i) is equal to 2 and all K(j) is equal to 2, so that J=4 and K=8; and I=4, all J(i) is equal to 4 and all K(j) is equal to 2, so that J=16 and K=32.

In an optional embodiment, the method further includes at least one of:
the first component is any component in a Y component, a U component and a V component, or any component in a G component, a B component and an R component;
the second component is any component, except the first component, in the Y component, the U component and the V component, or any component, except the first component, in the G component, the B component and the R component; and
the third component is the component, except the first component and the second component, in the Y component, the U component and the V component, or the component, except the first component and the second component, in the G component, the B component and the R component.

In an optional embodiment, the method may include one of:
the first component, the second component and the third component are respectively the Y component, the U component and the V component;
the first component, the second component and the third component are respectively the Y component, the V component and the U component;
the first component, the second component and the third component are respectively the G component, the B component and the R component;
the first component, the second component and the third component are respectively the component with a largest number of different numerical values in the three components, the component with a second largest number of different numerical values in the three components and the component with a smallest number of different numerical values in the three components; and
the first component, the second component and the third component are respectively the component with the smallest number of different numerical values in the three components, the component with a second smallest number of different numerical values in the three components and the component with the largest number of different numerical values in the three components,
and the three components are the Y component, the U component and the V component, or the three components are the G component, the B component and the R component.

In an optional embodiment, during performing grouping of a next layer on a group, a number of subdivided groups of the next layer is determined according to a number of different numerical values in the component corresponding to the layer in the group.

In an optional embodiment, during performing grouping of a next layer on a group, when a number of different numerical values in the component corresponding to the layer in the group is 1, the group is divided into one group of the next layer; when the number of different numerical values is larger than 1, the group is divided into more than two groups of the next layer.

In an optional embodiment, during performing grouping of a next layer on a group, if a number of different numerical values in the component corresponding to the layer in the group is N, the group is divided into N groups of the next layer.

In an optional embodiment, after dividing the palette pixels into the K groups, the method further includes: when the one of the input pixels is not classified into any group among the K groups (for example, the input pixel is greatly different from the pixels in the palette pixels), classifying the one of the input pixels into an empty group; and after the one of the input pixels is classified into the empty group, setting the palette pixel corresponding to the one of the input pixels as the value of the one of input pixels, or an empty pixel, or a default value.

From the above descriptions about the implementation modes, those skilled in the art can clearly learn about that the methods of the embodiments are implemented in a manner of combining software and a necessary universal hardware platform, and of course, are also implemented through hardware, but the former one is a better implementation mode under many conditions. Based on such an understanding, the technical solutions of the present invention substantially or parts making contributions to the related art are embodied in form of software product, and the computer software product is stored in a storage medium (such as a Read Only Memory (ROM) or Random Access Memory (RAM), a magnetic disk and an optical disk), including a plurality of instructions configured to enable a terminal equipment (which is a mobile phone, a computer, a server, network equipment or the like) to execute the method of each embodiment of the present invention.

An embodiment also provides a device for image processing, which is arranged to implement the abovementioned embodiment and exemplary implementation modes, and what has been described will not be elaborated. For example, term "component", used below, is a combination of software and/or hardware capable of realizing a preset function. Although the device described in the following embodiment is exemplary implemented with software, implementation with hardware or a combination of the software and the hardware is also possible and conceivable.

Fig. 4 is a structural block diagram of a device for image processing according to an embodiment of the present invention. As shown in Fig. 4, the device includes a determination component 42 and a conversion component 44. The device will be described below.

The determination component 42 is arranged to determine corresponding pixels in palette pixels corresponding to input pixels, and the input pixels include one or more pixels which are not in the palette pixels; and the conversion component 44 is connected with the determination component 42, and is arranged to convert the input pixels into the corresponding pixels in the palette pixels.

In an optional embodiment, when determining the corresponding pixels corresponding to the input pixels, the determination component 42 is arranged to execute the following operations: grouping the palette pixels, including: dividing the palette pixels into K groups, and K is a positive integer; determining the group among the K groups into which one of the input pixels is to be classified; and determining the corresponding pixel in the group into which the one of the input pixel is to be classified.

In an optional embodiment, when dividing the palette pixels into the K groups, the determination component 42 is arranged to execute the following operation: dividing the palette pixels into the K groups according to a characteristic of input pixel samples; determining the group among the K groups into which the one of the input pixels is to be classified includes: determining the group among the K groups into which the input pixel is to be classified according to the characteristic of the input pixel samples and the input pixel samples (for example, determining that the input pixel will be classified into a group containing a pixel resulting in a difference between the characteristic of the input pixel which is smaller than a preset threshold); and determining the corresponding pixel in the group into which the input pixel is to be classified includes: determining difference values of sample of the one of the input pixels and part or all of the palette pixels in the group into which the input pixel is to be classified, and determining the palette pixel with a smallest difference value with the one of the input pixels as the corresponding pixel.

Moreover, there are multiple grouping manners when the determination component 42 groups the palette pixels, and how to perform grouping will be described below with examples. Dividing the palette pixels into the K groups according to the characteristic of the input pixel samples includes: dividing the palette pixels into the K groups according to characteristics of numerical values of components of the pixels. For example, grouping is performed according to a sequence from large to small numerical values of the components of the pixels, or grouping is performed according to a sequence from small to large numerical values of the components of the pixels. And a number of the pixels in each group is set to be similar. That is, a number difference between every two groups is smaller than a predetermined threshold value.

In an optional embodiment, when grouping the palette pixels, the determination component 42 is arranged to perform grouping once or for multiple times according to the components of the pixels. In the embodiment, dividing the palette pixels into the K groups according to the characteristics of the numerical values of the components of the pixels includes: dividing the palette pixels into the K groups according to the numerical values of first components in the components of the pixels (that is, the palette pixels are grouped once);
or, dividing the palette pixels into L groups according to the numerical values of the first components in the components of the pixels, the L groups being first-layer groups and L being a positive integer, and dividing the pixels of an xth group in the first-layer groups into M(x) groups according to the numerical values of second components in the components of the pixels, and the groups formed by dividing the pixels of the xth group in the first-layer groups are second-layer groups, x=1,2,3,......,l, M(x) is a positive integer, and K=M(1)+M(2)+......+M(x) (that is, the palette pixels are grouped once at first according to the first components, and then the groups formed by grouping are further divided according to the second components, that is, the palette pixels are grouped twice);
or, dividing the palette pixels into I groups according to the numerical values of the first components in the components of the pixels, the I groups being first-layer groups and I being a positive integer, dividing the pixels of an ith group in the first-layer groups into J(i) groups according to the numerical values of the second components in the components of the pixels, i=1,2,3,......,l, J(i) being a positive integer, the groups formed by dividing the pixels of the ith group in the first-layer groups being second-layer groups and the palette pixels being divided into J=J(1)+J(2)+J(3)+......+J(I) second-layer groups, and dividing the pixels of a jth group in the second-layer groups into K(j) groups according to the numerical values of third components in the components of the pixels, and j=1,2,3,......,J, K(j) is a positive integer, the groups formed by dividing the pixels of the jth group in the second-layer groups are third-layer groups, and the palette pixels are divided into K=K(1)+K(2)+K(3)+......+K(J) third-layer groups (that is, the palette pixels are grouped for three times, and grouping is performed according to different components each time: grouping is performed for the first time according to the first components, grouping is performed for the second time according to the second components and grouping is performed for the third time according to the third components).

Similarly, in future development, when there are more than four components in the pixels, layered grouping may also be performed on the palette pixels for more than four times according to different components respectively.

An optional embodiment includes at least one of that: differences between numbers of the pixels of each group in the K groups are smaller than a fourth predetermined threshold value; differences between numbers of the pixels of each group in the L groups are smaller than a fifth predetermined threshold value; differences between numbers of the pixels of each group in the M(x) groups are smaller than a sixth predetermined threshold value; differences between numbers of the pixels of each group in the I groups are smaller than a first predetermined threshold value; differences between numbers of the pixels of each group in the J(i) groups are smaller than a second predetermined threshold value; differences between numbers of the pixels of each group in the K(j) groups are smaller than a third predetermined threshold value; I=2, all J(i) is equal to 2 and all K(j) is equal to 2, so that J=4 and K=8; and I=4, all J(i) is equal to 4 and all K(j) is equal to 2, so that J=16 and K=32.

An optional embodiment includes at least one of:
the first component is any component in a Y component, a U component and a V component, or any component in a G component, a B component and an R component;
the second component is any component, except the first component, in the Y component, the U component and the V component, or any component, except the first component, in the G component, the B component and the R component; and
the third component is the component, except the first component and the second component, in the Y component, the U component and the V component, or the component, except the first component and the second component, in the G component, the B component and the R component.

An optional embodiment includes one of:
the first component, the second component and the third component are respectively the Y component, the U component and the V component;
the first component, the second component and the third component are respectively the Y component, the V component and the U component;
the first component, the second component and the third component are respectively the G component, the B component and the R component;
the first component, the second component and the third component are respectively the component with a largest number of different numerical values in the three components, the component with a second largest number of different numerical values in the three components and the component with a smallest number of different numerical values in the three components; and
the first component, the second component and the third component are respectively the component with the smallest number of different numerical values in the three components, the component with a second smallest number of different numerical values in the three components and the component with the largest number of different numerical values in the three components,
and the three components are the Y component, the U component and the V component, or the three components are the G component, the B component and the R component.

In an optional embodiment, during performing grouping of a next layer on a group, a number of subdivided groups of the next layer is determined according to a number of different numerical values in the component corresponding to the layer in the group.

In an optional embodiment, during performing grouping of a next layer on a group, when a number of different numerical values in the component corresponding to the layer in the group is 1, the group is divided into one group of the next layer; when the number of different numerical values is larger than 1, the group is divided into more than two groups of the next layer.

In an optional embodiment, during performing grouping of a next layer on a group, if a number of different numerical values in the component corresponding to the layer in the group is N, the group is divided into N groups of the next layer.

In an optional embodiment, after dividing the palette pixels into the K groups, the method further includes: when the one of the input pixel is not classified into any group among the K groups (for example, the input pixel is greatly different from the pixels in the palette pixels), classifying the one of the input pixels into an empty group; and after the one of the input pixel is classified into the empty group, setting the palette pixel corresponding to the one of the input pixels as the value of the one of the input pixels, or an empty pixel, or a default value.

It is important to note that each component is implemented through software or hardware, and under the latter condition, is implemented in, but not limited to, the following manner: the components are all positioned in the same processor, or the components are positioned in multiple processors respectively.

An embodiment of the present invention also provides a storage medium. Optionally, in the embodiment, the storage medium is arranged to store program codes configured to execute the following steps.

At step S1, a corresponding pixels in palette pixels corresponding to input pixels are determined, and the input pixel includes one or more pixels which are not included in the palette pixels.

At step S2, the input pixel are converted into the corresponding pixels in the palette pixels.

Optionally, in the embodiment, the storage medium includes, but not limited to: various media capable of storing program codes such as a U disk, a ROM, a RAM, a mobile hard disk, a magnetic disk or an optical disk.

Optionally, in the embodiment, a processor executes the operating steps in each method embodiment according to the program codes stored in the storage medium.

Optionally, specific examples in the embodiment refer to examples described in the abovementioned embodiments and optional implementation modes, and will not be elaborated in the embodiment.

Obviously, those skilled in the art should know that each component or each step of the present invention is implemented by a universal computing device, and the components or steps are concentrated on a single computing device or distributed on a network formed by multiple computing devices, and are optionally implemented by program codes executable for the computing devices, so that the components or steps are stored in a storage device for execution with the computing devices, the shown or described steps are executed in sequences different from those shown or described here in some circumstances, or form each integrated circuit component respectively, or multiple components or steps therein form a single integrated circuit component for implementation. As a consequence, the present invention is not limited to any specific hardware and software combination.

The above are the exemplary embodiments of the present invention and not intended to limit the present invention. For those skilled in the art, the present invention has various modifications and variations. Any modifications, equivalent replacements, improvements and the like made within the scope protection as claimed in claims of the present invention shall fall within the scope of protection of the present invention.

### Industrial Applicability

As mentioned above, the method and device for image processing provided by the embodiments of the present invention have the following beneficial effects: the problem of incapability in converting any pixel outside a current block into a palette pixel of the current block in the related art is solved, and effects of achieving a purpose of converting any pixel outside the current block into the palette pixel of the current block and improving compression efficiency are further achieved.

## Claims

1. A method for image processing, comprising:
determining (S302) corresponding pixels in palette pixels corresponding to input pixels, wherein the input pixels comprise one or more pixels which are not included in the palette pixels; and
converting (S304) the input pixels into the corresponding pixels in the palette pixels;
wherein determining the corresponding pixels in palette pixels corresponding to the input pixels comprises: dividing the palette pixels into K groups, wherein K is a positive integer; determining a group among the K groups into which one of the input pixels is to be classified; and determining the corresponding pixel in the group into which the one of the input pixels is to be classified;
wherein dividing the palette pixels into the K groups comprises: dividing the palette pixels into the K groups according to a characteristic of input pixel samples;
determining the group among the K groups into which the one of the input pixels is to be classified comprises: determining the group among the K groups into which the one of the input pixels is to be classified according to the characteristic of the input pixel samples and the input pixel samples; and
determining the corresponding pixel in the group into which the one of the input pixels is to be classified comprises: determining difference values of samples of the one of the input pixels and part or all of the palette pixels in the group into which the one of the input pixels is to be classified, and determining a palette pixel with a smallest difference value with the one of the input pixels as the corresponding pixel.

2. The method as claimed in claim 1, wherein dividing the palette pixels into the K groups according to the characteristic of the input pixel samples comprises:
dividing the palette pixels into the K groups according to characteristics of numerical values of components of pixels.

3. The method as claimed in claim 2, wherein dividing the palette pixels into the K groups according to the characteristics of the numerical values of the components of the pixels comprises:
dividing the palette pixels into the K groups according to numerical values of first components in the components of the pixels; or,
dividing the palette pixels into L groups according to numerical values of first components in the components of the pixels, wherein the L groups are first-layer groups and L is a positive integer; and dividing pixels of an xth group in the first-layer groups into M(x) groups according to numerical values of second components in the components of the pixels, wherein the groups formed by dividing pixels of the xth group in the first-layer groups are second-layer groups, x=1,2,3,......,l, M(x) is a positive integer, and K=M(1)+M(2)+......+M(x); or,
dividing the palette pixels into I groups according to numerical values of first components in the components of the pixels, wherein the I groups are first-layer groups and I is a positive integer; dividing pixels of an ith group in the first-layer groups into J(i) groups according to numerical values of second components in the components of the pixels, wherein i=1,2,3,......,l, J(i) is a positive integer, the groups formed by dividing the pixels of the ith group in the first-layer groups are second-layer groups and the palette pixels are divided into J=J(1)+J(2)+J(3)+......+J(l) second-layer groups; and dividing pixels of a jth group in the second-layer groups into K(j) groups according to numerical values of third components in the components of the pixels, wherein j=1,2,3,......,J, K(j) is a positive integer, the groups formed by dividing the pixels of the jth group in the second-layer groups are third-layer groups, and the palette pixels are divided into K=K(1)+K(2)+K(3)+......+K(J) third-layer groups.

4. The method as claimed in claim 3, wherein comprising at least one of:
differences between numbers of pixels of each group in the K groups are smaller than a fourth predetermined threshold value;
differences between numbers of pixels of each group in the L groups are smaller than a fifth predetermined threshold value;
differences between numbers of pixels of each group in the M(x) groups are smaller than a sixth predetermined threshold value;
differences between numbers of pixels of each group in the I groups are smaller than a first predetermined threshold value;
differences between numbers of pixels of each group in the J(i) groups are smaller than a second predetermined threshold value;
differences between numbers of pixels of each group in the K(j) groups are smaller than a third predetermined threshold value;
I=2, all J(i) is equal to 2 and all K(j) is equal to 2, so that J=4 and K=8; and
I=4, all J(i) is equal to 4 and all K(j) is equal to 2, so that J=16 and K=32.

5. The method as claimed in claim 3, comprising at least one of:
each of the first components is any component in a Y component, a U component and a V component, or any component in a G component, a B component and an R component;
each of the second components is any component, except the first components, in a Y component, a U component and a V component, or any component, except the first components, in a G component, a B component and an R component; and
each of the third components is any component, except the first components and the second components, in a Y component, a U component and a V component, or any component, except the first components and the second components, in a G component, a B component and an R component.

6. The method as claimed in claim 3, wherein comprising one of:
a first component, a second component and a third component are respectively a Y component, a U component and a V component;
a first component, a second component and a third component are respectively a Y component, a V component and a U component;
a first component, a second component and a third component are respectively a G component, a B component and an R component;
a first component, a second component and a third component are respectively a component with a largest number of different numerical values in the three components, a component with a second largest number of different numerical values in the three components and a component with a smallest number of different numerical values in the three components; and
a first component, a second component and a third component are respectively a component with the smallest number of different numerical values in the three components, a component with a second smallest number of different numerical values in the three components and a component with the largest number of different numerical values in the three components,
wherein three components are a Y component, a U component and a V component, or three components are a G component, a B component and an R component.

7. The method as claimed in any one of claims 3-6, wherein, during performing grouping of the next layer on the group, determining a number of subdivided groups of the next layer according to a number of different numerical values in the component corresponding to the layer in the group.

8. The method as claimed in claim 7, wherein, during performing grouping of the next layer on the group, when a number of different numerical values in the component corresponding to the layer in the group is 1, dividing the group into one group of the next layer; when the number of different numerical values is larger than 1, dividing the group more than two groups of the next layer.

9. The method as claimed in claim 7, wherein, during performing grouping of the next layer on the group, when a number of different numerical values in the component corresponding to the layer in the group is N, dividing the group into N groups of the next layer.

10. The method as claimed in claim 1, wherein after dividing the palette pixels into the K groups, further comprising:
when the one of the input pixels is not classified into any group among the K groups, classifying the one of the input pixels into an empty group; and
after the one of the input pixels is classified into the empty group, setting the palette pixel corresponding to the one of the input pixels as the value of the one of the input pixel, or an empty pixel, or a default value.

11. A device for image processing, comprising:
a determination component (42), arranged to determine corresponding pixels in palette pixels corresponding to input pixels, wherein the input pixels comprise one or more pixels which are not included in the palette pixels; and
a conversion component (44), arranged to convert the input pixels into the corresponding pixels in the palette pixels;
wherein the determination component (42) is arranged to divide the palette pixels into K groups, wherein K is a positive integer; determine a group among the K groups into which one of the input pixels is to be classified; and determine the corresponding pixel in the group into which the one of the input pixels is to be classified;
wherein the determination component (42) is arranged to divide the palette pixels into K groups according to the following means: divide the palette pixels into the K groups according to a characteristic of input pixel samples; the determination component (42) is arranged to determine the group among the K groups into which one of the input pixels is to be classified according to the following means: determine the group among the K groups into which the one of the input pixels is to be classified according to the characteristic of the input pixel samples and the input pixel samples; and the determination component (42) is arranged to determine the corresponding pixel in the group into which the one of the input pixels is to be classified according to the following means: determine difference values of samples of the one of the input pixels and part or all of the palette pixels in the group into which the one of the input pixels is to be classified, and determining a palette pixel with a smallest difference value with the one of the input pixels as the corresponding pixel.
